(19) Europäisches Patentamt

European Patent Office

Office européen des brevets

(11) **EP 1 031 081 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(21) Anmeldenummer: **98964353.1**

(22) Anmeldetag: **11.11.1998**

(51) Int Cl.⁷: **G06F 11/00**

(86) Internationale Anmeldenummer:
**PCT/DE98/03323**

(87) Internationale Veröffentlichungsnummer:
**WO 99/27448 (03.06.1999 Gazette 1999/22)**

(54) **PROGRAMMGESTEUERTE EINHEIT UND VERFAHREN**

PROGRAM-CONTROLLED UNIT AND METHOD

DISPOSITIF D' UNITE COMMANDEE PAR PROGRAMME ET METHODE

(84) Benannte Vertragsstaaten:
**DE FR GB IT**

(30) Priorität: **19.11.1997 DE 19751156**
**22.05.1998 DE 19822999**

(43) Veröffentlichungstag der Anmeldung:
**30.08.2000 Patentblatt 2000/35**

(73) Patentinhaber: **Infineon Technologies AG**
**81669 München (DE)**

(72) Erfinder:
• **BECKMANN, Jürgen**
**D-47506 Neukirchen-Vluyn (DE)**

• **VON WENDORFF, Wilhard**
**D-81241 München (DE)**

(74) Vertreter: **Jannig, Peter, Dipl.-Ing. et al**
**Jannig & Repkow,**
**Patentanwälte,**
**Klausenberg 20**
**86199 Augsburg (DE)**

(56) Entgegenhaltungen:
**EP-A- 0 649 091**

**Beschreibung**

Die vorliegende Erfindung betrifft eine programmgesteuerte Einheit gemäß dem Oberbegriff des Patentanspruchs 1 sowie ein Verfahren zur Befehlskorrektur bei einer programmgesteuerten Einheit.

Demgemäß ist eine programmgesteuerte Einheit vorgesehen, die dazu ausgelegt ist, ein Programm bestehend aus einer Vielzahl von Befehlen auszuführen,

- mit mindestens einem Programmspeicher, in dem die Vielzahl von Befehlen abgelegt ist,
- mit mindestens einer Decodiereinrichtung, der nacheinander einzelne Befehle aus dem Programmspeicher zuführbar sind, und
- mit mindestens einer Ausführungseinheit, die die decodierten Befehle der Decodiereinrichtung weiterverarbeitet.

Derartige programmgesteuerte Einheiten sind beispielsweise Mikroprozessoren, Mikrocontroller, Signalprozessoren oder dergleichen. Programmgesteuerte Einheiten sind in der Regel dazu ausgelegt, Programme auszuführen.

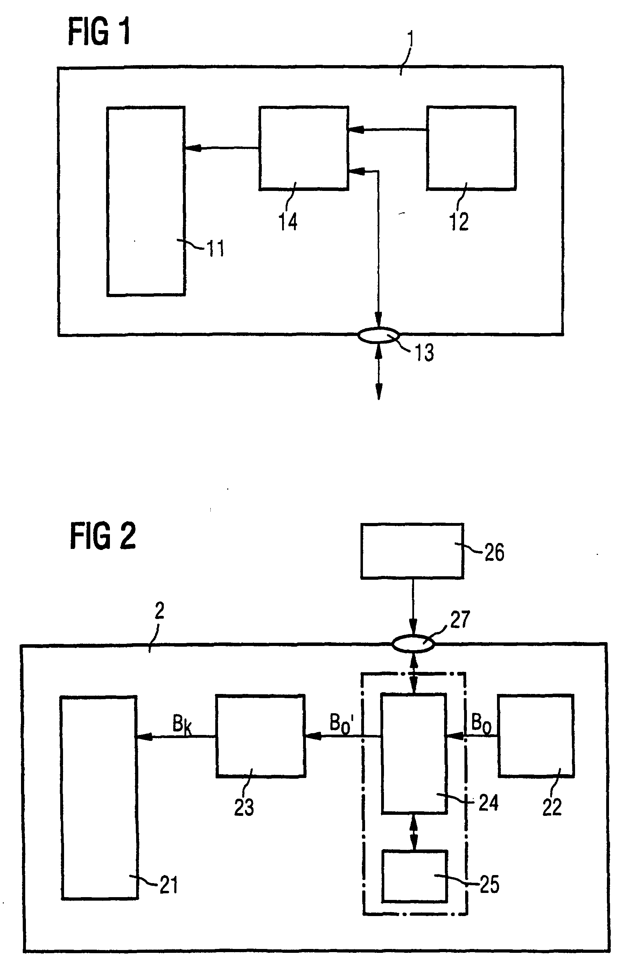

Der grundsätzliche Aufbau einer programmgesteuerten Einheit ist in Figur 1 dargestellt. Die dort gezeigte programmgesteuerte Einheit 1 umfaßt eine Rechen- und Steuereinheit 11 (Ausführungseinheit), die beispielsweise als zentrale Recheneinheit (CPU) ausgebildet sein kann, einen internen Festwertspeicher in Form eines ROMs 12, eine I/O-Schnittstelle 13 zur Verbindung der programmgesteuerten Einheit 1 mit einem in Figur 1 nicht gezeigten externen Speicher und eine zwischen den Speichern und der Rechen- und Steuereinheit 11 geschaltete Dekodereinrichtung 14 in Form eines Befehlsdekoders.

Die von der Rechen- und Steuereinheit 11 auszuführenden Programme, genauer gesagt die diese repräsentierenden Programmcodes, können im internen Festwertspeicher 12 und/oder im externen Speicher abgelegt sein. Die Dekodereinrichtung 14 löst dann die zur Ausführung dieser Programmcodes erforderlichen Schritte in der Rechen- und Steuereinheit 11 aus.

Mit der steigenden Komplexität von programmgesteuerten Einheiten wird es zunehmend schwieriger, fehlerfreie Systeme zu entwickeln. Insbesondere stellt sich häufig erst nach deren Entwicklungsphase bzw. Herstellungsphase heraus, daß einzelne Prozessorbefehle bzw. Programmteile zu falschen oder gar destruktiven Ausführungen der Rechen- und Steuereinheit führen.

Derartige Fehler in einem Befehl oder einer Befehlsfolge einer programmgesteuerten Einheit konnten bislang hardewaremäßig nur durch ein grundlegend neues, kostenintensives Nachdesign der programmgesteuerten Einheit oder zumindest Teilen davon behoben werden. Erschwerend kommt hinzu, daß ein solches Nachdesign einer fehlerhaften programmgesteuerten Einheit äußerst zeitaufwendig ist, was insbesondere zu Wettbewerbsnachteilen gegenüber konkurrierenden Produkten führen kann.

Einfacher läßt sich ein bekannt gewordener Fehler in einem Befehl/Befehlsfolge softwaremäßig korrigieren oder vermeiden. Insbesondere kann hier durch verhältnismäßig einfache Maßnahmen darauf geachtet werden, daß die fehlerhaften Befehle/Befehlsfolgen nicht verwendet werden. Diese softwaremäßige Befehlskorrektur ist jedoch nur schwer durch den Hersteller zu kontrollieren. Insbesondere führt die softwaregesteuerte Fehlerkorrektur zu einer mitunter erheblichen Beeinträchtigung der Leistungsfähigkeit der gesamten programmgesteuerten Einheit.

Die beiden oben genannten Maßnahmen zur Fehlerkorrektur von Befehlen einer programmgesteuerten Einheit, d. h. die software- oder hardwaremäßige Fehlerkorrektur, können jedoch eine vorsätzlich mißbräuchliche Ausnutzung eines Befehls/Befehlsfolge, beispielsweise durch Computerviren, nicht verhindern.

Darüberhinaus müssen bei der entwicklung von programmgesteuerten Einheiten auch die nachfolgenden Aspekte und Problemstellungen beachtet werden:

Typischerweise wächst die Bandbreite von internen oder externen Speicherbauteilen langsamer als die Bandbreite der entsprechenden Steuer- und Recheneinheit bzw. der CPU. Aufgrund dessen muß bei der Entwicklung auf eine sehr hohe Codierungsdiche Wert gelegt werden. Dies kann beispielsweise durch spezielle anwenderspezifische Befehle, wie beispielsweise den sogenannten CISC-Befehlen (complex instruction set computer) erreicht werden. Auf der anderen Seite ist es jedoch auch notwendig, daß ein- und dieselbe Steuer- und Recheneinheit flexibel ausgelegt ist und für unterschiedliche Anwendungen geeignet ist.

Ein weiterer wichtiger Aspekt betrifft die steigende Komplexität im Design von neuen programmgesteuerten Einheiten. Aufgrund dieser steigenden Komplexität ist es nahezu unmöglich, fehlerfreie programmgesteuerte Einheiten zu erzeugen. Bislang werden fehlerhafte Befehle oder Befehlsketten mittels Software in entsprechende Austauschbefehle bzw. Austauschbefehlsketten umgewandelt. Derartige Softwarebefehle erfordern jedoch zusätzlichen Speicheraufwand, wodurch der real zur Verfügung stehende Speicher eingegrenzt wird.

Ein weiterer sehr wichtiger Aspekt bei der Entwicklung von programmgesteuerten Einheit liegt in der Minimierung der Leistungsaufnahme.

Der vorliegenden Erfindung liegt demgegenüber die Aufgabe zugrunde, eine programmgesteuerte Einheit und ein Verfahren zur Befehlskorrektur bei einer programmgesteuerten Einheit anzugeben, bei der nachträglich entdeckte Fehler in einem Befehl/Befehlsfolge auf einfache Weise korrigiert werden können. Gleichzeitig oder alternativ sollte nicht nur die Korrektur der fehlenden Befehle, sondern auch eine individuelle Anpassung der programmgesteuerten Einheit an bestimmte Aufgaben bzw. an eine bestimmte Hardewareumgebung ermöglicht werden.

Erfindungsgemäß wird diese Aufgabe durch eine programmgesteuerte Einheit mit den Merkmalen des Patentanspruchs 1 sowie ein Verfahren zur Befehlskorrektur bei einer programmgesteuerten Einheit mit den Merkmalen des Patentanspruchs 10 gelöst.

Demgemäß ist eine gattungsgemäße programmgesteuerte Einheit vorgesehen, die dadurch gekennzeichnet ist, daß mindestens eine Einrichtung zur Befehlskorrektur vorgesehen ist, die einen einzelnen, aus dem Programmspeicher ausgelesenen Befehl mit mindestens einem vorgegebenen Befehl oder Befehlsmuster vergleicht und bei einem Abweichen des ausgelesenen Befehls von dem vorgegebenen Befehl oder Befehlsmuster einen transformierten oder korrigierten Befehl erzeugt.

Weiters ist ein gattungsgemäßes Verfahren zur Befehlskorrektur einer programmgesteuerten Einheit vorgehen, bei dem folgende Verfahrensschritte ausgeführt werden:

a) Ein einzelner Befehl wird aus dem Programmspeicher in die Schaltung zur Befehlskorrektur geladen;
b) der Befehl wird mit mindestens einem vorgegebenen Befehlsmuster verglichen;
c) bei einem vorgegebenen Abweichen des Befehls von dem vorgegebenen Befehlsmuster wird ein transformierter oder korrigierter Befehl erzeugt;
d) der transformierte oder korrigierte Befehl wird anschließend der Decodiereinrichtung zugeführt.

Durch die erfindungsgemäße programmgesteuerte Einheit bzw. das erfindungsgemäße Verfahren werden verbotene oder fehlerhafte oder unzulässige Befehle/Befehlsfolgen vor deren Verarbeitung durch die Decodiereinrichtung aussortiert. Die aussortierten Befehle/Befehlsfolgen werden vorteilhafterweise durch korrigierte oder transformierte neue Befehle oder Befehlsfolgen ersetzt, die dann der Decodiereinrichtung zugeführt werden. Diese Fehlerkorrektur erfolgt auf einfache Weise durch eine Schaltung zur Befehlskorrektur, die vorzugsweise zwischen Decodiereinrichtung und Programmspeicher angeordnet ist. Für eine Fehlerkorrektur ist es im einfachste Fall bereits ausreichend, die auszusortierenden Befehle/Befehlsfolgen oder auch lediglich ein markantes Befehlsmuster daran in einem lokalen Speicher abzulegen, in dem dann auch die Befehle/Befehlsfolgen abgelegt sind, durch die die fehlerhaften Befehle/Befehlsfolgen ersetzt werden sollen.

Der besondere Vorteil der erfindungsgemäßen Schaltung zur Befehlskorrektur bzw. des lokalen Speichers besteht darin, daß es sich hierbei um ein leicht umprogrammierbares bzw. vorzugsweise auch austauschbares Schaltungsteil der programmgesteuerten Einheit handelt. Mit der Einrichtung zur Befehlskorrektur können nachträglich erkannte Fehler des Programmspeichers bzw. der Rechen- und Steuereinheit korrigiert werden, ohne daß der Programmspeicher bzw. die Rechen- und Steuereinheit ausgetauscht werden müssen.

Die durch die Einrichtung zur Befehlskorrektur auszusortierenden Befehle sind typischerweise fehlerhafte Befehle/Befehlsfolgen des Programmspeichers. Es sei jedoch an dieser Stelle angemerkt, daß die vorliegende Erfindung nicht beschränkt ist auf das Aussortieren von solchen fehlerhaften Befehlen/Befehlsfolgen. Insbesondere ist die Erfindung auch sehr vorteilhaft, wenn es sich bei den auszusortierenden Befehlen um unerwünschte oder verbotene Befehle/Befehlsfolgen handelt. Verbotene Befehle können beispielsweise Befehle/Befehlsfolgen sein, die durch Computerviren oder einem Hardewarefehler verursacht wurden. Nachfolgend werden daher der Einfachheit halber alle diese vorstehend bezeichneten Befehle/Befehlsfolgen kurz als auszusortierende Befehle bezeichnet.

Vorteilhafte Ausgestaltungen und Weiterbildungen der Erfindung sind den jeweiligen Unteransprüchen zu entnehmen.

Die Erfindung wird nachfolgend anhand der in den Figuren der Zeichnung angegebenen Ausführungsbeispiele näher erläutert. Es zeigt dabei:

Figur 1    schematisch den inneren Aufbau einer herkömmlichen programmgesteuerten Einheit;

Figur 2    schematisch den inneren Aufbau einer erfindungsgemäßen programmgesteuerten Einheit;

Figur 3    schematisch den Ablauf des erfindungsgemäßen Verfahrens zur Befehlskorrektur in der Schaltung zur Befehlskorrektur.

Bei der nachfolgend näher beschriebenen programmgesteuerten Einheit handelt es sich um einen Microcontroller. Die Erfindung ist jedoch nicht auf Microcontroller beschränkt, sondern kann sehr vorteilhaft auch bei als Mikroprozessoren, Signalprozessoren oder dergleichen ausgebildeten, programmgesteuerte Einheiten verwendet werden.

Figur 2 zeigt schematisch den inneren Aufbau des durch die Schaltung zur Befehlskorrektur erweiterten erfindungsgemäßen programmgesteuerten Einheit.

In Figur 2 ist mit 2 der Microcontroller bezeichnet. Der Microcontroller 2 enthält unter anderem eine Rechen- und Steuereinheit 21. Die Rechen- und Steuereinheit 21 ist im vorliegenden Ausführungsbeispiel eine zentrale Recheneinheit CPU, kann jedoch auch als Coprozessor wie beispielsweise ein Kryptoprozessor ausgebildet sein. Ferner weist der Microcontroller 2 einen Programmspeicher 22 auf, der beispielsweise als Festspeicher in Form eines Flash-EPROMs ausgebildet ist. Es wäre selbstverständlich auch denkbar, daß der Programmspeicher 22 als RAM-Speicher ausgebildet ist, der regelmäßig von einem externen Massespeicher, z. B. einer Floppydisk oder einer Festplatte, geladen wird. Der Programmspeicher 22 enthält das Programm des Microcontrollers, die dort typischerweise in Form von Befehlscodes abgelegt sind.

Zwischen der Rechen- und.Steuereinheit 21 und dem Programmspeicher 22 ist eine Decodiereinrichtung 23 vorgesehen. Erfindungsgemäß ist dem Programmspeicher 22 eine Schaltung zur Befehlskorrektur 24 nachgeschaltet. Im gezeigten Ausführungsbeispiel ist die Schaltung zur Befehlskorrektur 24 zwischen Programmspeicher 22 und Decodiereinrichtung 23 angeordnet. Es wäre selbstverständlich auch denkbar, daß die Schaltung zur Befehlskorrektur 24 zwischen der Decodiereinrichtung 23 und der Rechen- und Steuereinheit 21 angeordnet ist bzw. durch die Rechen- und Steuereinheit 21 selbst gebildet wird.

Die Schaltung zur Befehlskorrektur 24 weist einen beispielsweise als Festwertspeicher ausgebildeten, lokalen internen Speicher 25 auf. Zusätzlich oder alternativ wäre es auch denkbar, den lokalen Speicher als externen Speicher 26, der mit der Schaltung zur Befehlskorrektur 24 über eine I/O-Schnittstelle 27 verbunden ist, zu realisieren.

Ferner wäre es denkbar, wenn die Schaltung zur Befehlskorrektur 24 und der interne Speicher 25 in Form eines einzigen Bauteiles realisiert ist. Dieser Sachverhalt ist in Figur 2 mit dem durch gestrichelte Linie angedeuteten Kästchen dargestellt. Besonders vorteilhaft ist es ferner, wenn die Schaltung zur Befehlskorrektur 24 außerhalb der programmgesteuerten Einheit 2 angeordnet ist. Diese Möglichkeit ist insbesondere bei einem als Microcontroller ausgebildeten programmgesteuerten Einheit 2 von Vorteil.

In dieser "Durchgangsposition" zwischen Programmspeicher 22 und Dekodereinrichtung 23 kann die Schaltung zur Befehlskorrektur 24 alle von dem Programmspeicher 22 ankommenden Befehle $B_0$, die der Decodiereinrichtung 22 zugeführt werden sollen, kontrollieren. Gegebenenfalls auszusortierende Befehle/Befehlsfolgen können dann durch neue Befehle/Befehlsfolgen $B_0'$ ersetzt werden. Diese Befehlskorrektur erfolgt durch einen internen Vergleich jedes in die Schaltung zur Befehlskorrektur eingekoppelten Datums eines Befehlscodes $B_0$ mit entsprechenden Befehlscodes, die in dem lokalen Speicher 25, 26 abgelegt sind. Die entsprechenden Befehlscodes der gegebenenfalls auszusortierenden Befehle/Befehlsfolgen können vorteilhafterweise ebenfalls in dem lokalen Speicher 25, 26 abgelegt sein.

Der besondere Vorteil der vorliegenden Erfindung besteht darin, daß die Schaltung zur Befehlskorrektur 24 bzw. der lokale Speicher 25, 26 leicht umprogrammierbare Bauteile sind, mit denen nachträglich erkannte Fehler beispielsweise im Programmspeicher bzw. der Rechen- und Steuereinheit 21 auf einfache Weise korrigiert werden können, ohne daß der komplette Microcontroller 2 ausgetauscht werden muß. Für die Umprogrammierung ist es grundsätzlich bereits ausreichend, in dem lokalen Speicher 25, 26 die Befehle/Befehlsfolgen abzulegen, die auszusortieren sind, sowie die Befehle/Befehlsfolgen, durch die sie zu ersetzen werden sollen.

Hierbei kann durch geeignete hardwaremäßige Maßnahmen sichergestellt werden, daß die Wirkung bzw. die Funktionsweise der Schaltung zur Befehlskorrektur 24 nicht umgangen werden kann. Im einfachsten Fall kann diese Wirkung dadurch bewerkstelligt werden, daß der lokale Speicher 25, 26 hardwaremäßig als Festwertspeicher fixiert ist. Insbesondere kann ein solcher Festwertspeicher in bekannter Weise als ROM-, PROM-, EPROModer EEPROM-Speicherbauteil realisiert sein.

Während diese Hardewarelösung nahezu umgehungssicher ist, erfordert sie andererseits zusätzlichen Aufwand materialtechnischer und arbeitstechnischer Art. Deshalb können softwaremäßige Lösungen bevorzugt sein, bei denen die softwaregesteuerte Umprogrammierung des lokalen Speichers 25, 26, beispielsweise gesteuert durch die Rechen- und Steuereinheit 21, erfolgen kann.

Bei einer solchen softwaremäßigen Umprogrammierung müßte insbesondere Vorsorge für einen Mißbrauch dieser Programmierung getroffen werden. Dies könnte beispielsweise durch einen passwortgeschützten lokalen Speichers 25, 26 erreicht werden, wobei das Passwort beispielsweise lediglich dem Hersteller bekannt ist. Sobald dann ein fehlerhafter Befehl/Befehlsfolge des Microcontrollers 2 bekannt wird, könnte der Hersteller dieses Passwort bekanntgeben und durch ein spezielles Programm die Belegung eines oder mehrerer Speichersegmente im lokalen Speicher 25, 26 mit den benötigten Korrekturdaten - d. h. mit den auszusortierenden Befehlen und mit den diese ersetzenden Befehle - erlauben.

Auf diese Weise kann der lokale Speicher 25, 26 auf einfache Weise durch bloße Softwareanweisungen je nach Bedarf mit Korrekturdaten belegt werden. Die Korrektur gravierender Fehler in der Rechen- und Steuereinheit 21 bzw. im Programmspeicher könnte auf sehr einfache Weise erfolgen. Insbesondere wäre es auch denkbar, daß diese softwaregesteuerte Umprogrammierung des lokalen Speichers 25, 26 auf einfache Weise und kostenattraktiv beispielsweise über Internet oder einem gängigen anderen Datennetzwerk erfolgt.

Die oben beschriebene Ausführung der Schaltung zur Befehlskorrektur 24 ist selbstverständlich, sofern die Funktionalität dieser Schaltung erhalten bleibt, in weiten Grenzen abwandelbar. Insbesondere wäre es auch denkbar, die Schaltung zur Befehlskorrektur 24 mit einem Cache-Speicher zu kombinieren.

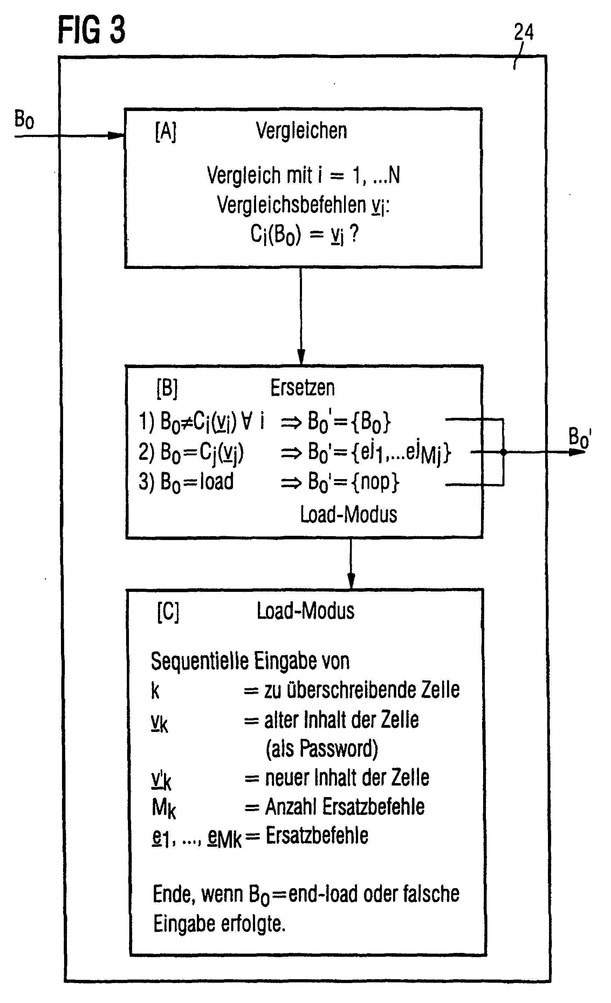

Nachfolgend wird das erfindungsgemäße Verfahren zur Befehlskorrektur 24 anhand des Ablaufdiagramms in Figur 3 näher beschrieben.

In den Eingang der Schaltung zur Befehlskorrektur 24 wird ein Befehl $B_0$ aus dem Programmspeicher 22 eingekoppelt. Bei dem Befehl $B_0$ handelt es sich beispielsweise um einen Befehlscode, der durch die Rechen- und Steuereinheit 21 ausgeführt werden soll. Typischerweise, jedoch nicht notwendigerweise, weist der Befehl $B_0$ eine Wortbreite von 4, 8, 16 oder 32 Bit auf.

Der Befehl $B_0$ wird in einem ersten Verfahrensschritt (A) mit N-verschiedenen Vergleichsbefehlen $v_i$ (i = 1... N) verglichen. Die Vergleichsbefehle $v_i$ sind zum Beispiel die in dem lokalen Speicher 25 abgelegten auszusortierenden Befehle bzw. deren Befehlsmuster. Aus Sicherheitsgründen sollte bei einer solchen Abfrage nicht ein direkter Vergleich ($B_0 = v_i$ ?) vorgenommen werden. Besonders vorteilhaft ist es vielmehr, wenn der zu vergleichende Befehl $B_0$ vor dem eigentlichen Vergleich durch eine eindeutige Codier-Abbildung $C_i(B_0)$ transformiert wird. Diese Transformation kann im einfachsten Fall mittels einer bitweisen XOR-Verknüpfung mit einem beispielsweise nur dem Prozessorhersteller bekannten Codewort $c_i$ erzielt werden. Für diese Transformation gilt dann folgende Beziehung:

$$C_i(B_0) := B_0 \text{ XOR } c_i$$

Diese Codier-Abbildung $C_i(B_0)$ können auf der Schaltung zur Befehlskorrektur 24 auf einfache Weise durch eine bekannte Logikschaltung, zum Beispiel durch ein festverdrahtetes logischens Gatter, ausgebildet sein.

In Abhängigkeit von dem Ergebnis dieses Vergleichs wird in einem zweiten Verfahrensschritt (B) der ausgangsseitig durch die Schaltung zur Befehlskorrektur 24 bereitgestellte Befehl $B_0'$ bestimmt. Dieser Befehl $B_0'$ kann dann an die Steuer- und Recheneinheit 21 weitergeleitet werden.

Für den ersten Fall (1), daß keine Übereinstimmung bei dem Vergleich gefunden wurde, ist $B_0' = B_0$. Daß bedeutet, der in die Schaltung zur Befehlskorrektur 24 eingekoppelte Befehl $B_0$ bleibt unverändert.

Für den zweiten Fall (2), daß eine Übereinstimmung von $B_0$ und $v_i$ gefunden wurde, wird am Ausgang der Schaltung zur Befehlskorrektur 24 eine Folge von $M_j$ Ersatzbefehlen ausgegeben, wobei für den Befehl $B_0'$ gilt:

$$B_0' = \{e_1^j,...e_{Mj}^j\}$$

Im einfachsten Fall wird hier stets nur ein einziger Befehl $B_0$ ausgegeben, d. h. $M_j = 1$. Allerdings kann die Leistungsfähigkeit der Schaltung zur Befehlskorrektur 24 erheblich gesteigert werden, wenn hier ganze Befehlsfolgen $B_0' = \{e_1^j,...e_{Mj}^j\}$ eingesetzt werden können. In diesem Falle ist allerdings auch eine zeitliche Abstimmung der Schaltung zur Befehlskorrektur 24 mit dem Befehlholen-Takt der Rechen- und Steuereinheit 21 erforderlich.

Bei dem oben beschriebenen Einbau ganzer Befehlsfolgen sollten die entsprechenden Daten möglichst ganz im Speicher 25 abgelegt sein. Das kann indes zu Problemen führen, wenn dessen Speicherkapazität erschöpft ist oder wenn variable Ersetzungen vorgenommen werden müssen (z. B. abhängig von der laufenden Software-Applikation). Für diesen Fall besteht alternativ oder zusätzlich die Möglichkeit, als Ersatzbefehl einen Software-Interrupt auszugeben, der extern (z. B. im BIOS) eine passende Routine mit der Funktionsnummer FN aufruft. Symbolisch könnte der Ausgangsbefehl $B_0'$ dann folgendermaßen aussehen:

$$B_0' = \{ \text{ lade Funktionsnummer FN in Register; interrupt zu FN,} \}$$

Der dritte Verfahrensschritt (C) in Figur 3 zeigt einen möglichen Ablauf zur Veränderung der Inhalte der Schaltung zur Befehlskorrektur 24 (Load-Modus). Eine derartige Veränderung könnte z. B. von einem eigens für die Schaltung zur Befehlskorrektur 24 vorgesehenen Befehl $B_0$ = load eingeleitet werden. Beim dem Vergleich im Verfahrensschritt (A), (B) wird dieser Befehl erkannt und führt dazu, daß die Schaltung zur Befehlskorrektur 24 in einen Load-Modus übergeht, in dem er eingekoppelte Befehle $B_0$ intern ausgewertet wird. Das Ergebnis dieser internen Auswertung kann, muß jedoch nicht, an die Rechen- und Steuereinheit 21 weitergeleitet werden. Gegebenenfalls könnten ersatzweise sogenannte No-Operation Befehle $B_0'$ = (nop) oder dergleichen an die Rechen- und Steuereinheit 21 weitergeleitet werden. Dieser kann dann den nächsten Befehlholen-Takt zum Einlesen des nächsten Befehls anzeigen.

Im Load-Modus werden die dem load-Befehl nachfolgenden Daten $B_0$ als sukzessive Informationen darüber verstanden,

(a) welcher Vergleichswert k

(b) mit dem jetzigen Inhalt $v_k$

(c) mit einem neuen Inhalt $v_k$ überschrieben werden soll und

(d) welche Anzahl $M_k$ von

(e) Ersatzbefehlen $e_1^k,...e_{Mk}^k$ dafür eingesetzt werden sollen.

Der Load-Modus könnte auch jederzeit, beispielsweise durch einen $B_0$ = end-load-Befehl oder durch eine falsche Eingabe, beendet werden.

Aus Sicherheitsgründen könnte der Load-Modus auch abgebrochen werden, wenn

- unter (a) ein k angegeben wird, das nicht dem nächsten freien k entspricht (d. h. es müßte k=N+1 gelten, also der Anzahl der bisher eingespeicherten Vergleiche plus eins entsprechen), oder wenn
- unter (b) nicht korrekt der augenblickliche Inhalt $v_k$ angegeben ist; dieser Inhalt dient also als ein - nur dem Hersteller bekanntes - Password, welches erst unmittelbar vor einem Überschreiben eingegeben werden kann.

Diese Sicherheitskontrolle bedingt, daß jeder Vergleichswert $v_k$ nur genau einmal gesetzt werden kann. Will man ein beliebig häufiges Überschreiben zulassen, so dürfte die Passwort-Kontrolle nicht mehr über den Inhalt $v_k$ erfolgen (der ja nach dem ersten Verändern öffentlich bekannt wird), sondern sie müßte über einen separaten Password-Speicher - ähnlich den Transaktions-Nummern im online-banking - oder eine andere Art der Zugangskontrolle erfolgen.

Besonders vorteilhaft ist es, wenn das Verfahren zur Befehlskorrektur von eingekoppelten Befehlen $B_0$ auf sehr schnelle Art und Weise mit in dem lokalen Speicher 25 abgelegten Befehlen/Befehlsfolgen verglichen wird. Dies ist insbesondere dann erreichbar, wenn diese im lokalen Speicher 25 abgelegten Befehle/Befehlsfolgen in Form von Befehlsmustern abgelegt sind. Diese Befehlsmuster kontrollieren dabei lediglich einen Teil der Daten der eingekoppelten Befehle $B_0$. Durch diesen Vergleich dieser Befehlsmuster kann die Leistungsfähigkeit der Schaltung zur Befehlskorrektur erheblich gesteigert werden, wodurch das Verfahren zur Befehlskorrektur nahezu ohne Verzögerung ablaufen kann.

Die vorliegende Erfindung bezieht sich generell auch auf die Implementierung von benutzerspezifischen Befehlen in einem festverdrahteten Baustein. Durch die vorliegende Erfindung kann der Benutzer auf sehr einfache Weise einen kompletten Befehlssatz durch einen Einzelbefehl ersetzen. Auf diese Weise muß diese Befehlssegments nicht mehrere Male im Programmcode des Programmspeichers oder in Form eines Unterprogrammes abgelegt sein. In diesem Fall arbeitet die Schaltung zur Befehlskorrektur quasi als "Precompiler" oder Vorübersetzer.

In einer Weiterbildung der Erfindung kann die erfindungsgemäße Schaltung zur Befehlskorrektur auch sehr vorteilhaft dafür eingesetzt werden, benützerspezifische Befehle in eine fest verdrahteten Logikschaltung zu implementieren.

Der besondere Vorteil darin liegt, daß fehlerhafte Befehle auf einfache Weise durch ganze Befehlsfolgen bzw. Befehlssequenzen, die dasselbe funktionelle jedoch nicht notwendigerweise zeitliche Verhalten des ursprünglichen Befehles aufweisen, ersetzt werden. Insbesondere kann der Benutzer hiermit auch die Adreßweite signifikant verringern.

Ein weiterer Vorteil besteht in der Möglichkeit der Verringerung der Benutzerfreundlichkeit von gewissen Operationen, beispielsweise wenn der Benutzer aus Gründen der Datensicherheit bewußt die Funktionalität herabsetzen möchte.

Besonders vorteilhaft ist die Erfindung, wenn die zu ersetzenden Befehle durch makroähnliche Befehlsfolgen oder Befehlssequenzen ersetzt werden. Auf diese Weise kann der Anwender die Codierungsdiche deutlich erhöhen. Weiters kann der Anwender ebenfalls die Leistungsaufnahme signifikant verringern, da durch diese makroähnlichen Befehle häufige Zugriffe auf Befehle oder Befehlscodes aus dem Programmspeicher, die naturgemäß einen erhöhten Leistungsverbrauch zur Folge haben, ersetzt werden können.

**Patentansprüche**

1. Programmgesteuerte Einheit (2), die dazu ausgelegt ist, ein Programm bestehend aus einer Vielzahl von Befehlen ($B_0$) auszuführen,

- mit mindestens einem Programmspeicher (22), in dem die Vielzahl von Befehlen ($B_0$) abgelegt ist,
- mit mindestens einer Decodiereinrichtung (23), der nacheinander einzelne Befehle ($B_0$) aus dem Programmspeicher (2) zuführbar sind, und
- mit mindestens einer Ausführungseinheit (21, die die decodierten Befehle ($B_D$) der Decodiereinrichtung (23) weiterverarbeitet,

**dadurch gekennzeichnet, daß**
mindestens eine Einrichtung zur Befehlskorrektur (24) vorgesehen ist, die einen einzelnen, aus dem Programmspeicher (22) ausgelesenen Befehl ($B_0$) mit mindestens einem vorgegebenen Befehl oder Befehlsmuster vergleicht und bei einem Abweichen des ausgelesenen Befehls ($B_0$) von dem vorgegebenen Befehl oder Befehlsmuster einen transformierten oder korrigierten Befehl ($B_0'$) erzeugt.

**2.** Programmgesteuerte Einheit nach Anspruch 1,
**dadurch gekennzeichnet, daß**
die Einrichtung zur Befehlskorrektur (24) eine Speichereinrichtung (25, 26) aufweist, in der die vorgegebenen Befehle oder Befehlsmuster abgelegt sind.

**3.** Programmgesteuerte Einheit nach Anspruch 2,
**dadurch gekennzeichnet, daß**
die Speichereinrichtung (25, 26) schreibgeschützt ist.

**4.** Programmgesteuerte Einheit nach einem der vorstehenden Ansprüche,
**dadurch gekennzeichnet, daß**
die Speichereinrichtung (25, 26) ein Festwertspeicher ist.

**5.** Programmgesteuerte Einheit nach einem der vorstehenden Ansprüche,
**dadurch gekennzeichnet, daß**
die Speichereinrichtung (25, 26) und/oder die Schaltung zur Befehlskorrektur (24) austauschbar ist.

**6.** Programmgesteuerte Einheit nach einem der vorstehenden Ansprüche,
**dadurch gekennzeichnet, daß**
der vorgegebene Befehl oder Befehlsmuster einen Fehler im Befehlssatz des Programmspeichers (22) anzeigt.

**7.** Programmgesteuerte Einheit nach einem der vorstehenden Ansprüche,
**dadurch gekennzeichnet, daß**
der vorgegebene Befehl oder Befehlsmuster die Datenfolge oder Befehle von mindestens einem bekannten Programmvirus angibt.

**8.** Programmgesteuerte Einheit nach einem der vorstehenden Ansprüche,
**dadurch gekennzeichnet, daß**
die programmgesteuerte Einheit (2) als Mikroprozessor oder als Mikrocontroller oder als Signalprozessor ausgebildet ist.

**9.** Programmgesteuerte Einheit nach einem der vorstehenden Ansprüche,
**dadurch gekennzeichnet, daß**
die Ausführungseinheit (21) die zentrale Recheneinheit ist.

**10.** Verfahren zur Befehlskorrektur bei einer programmgesteuerten Einheit (2) nach einem der vorstehenden Ansprüche,
bei der folgende Verfahrensschritte ausgeführt werden:

a) Ein einzelner Befehl ($B_0$) wird aus dem Programmspeicher (22) in die Schaltung zur Befehlskorrektur (24) geladen;
b) der Befehl ($B_0$) wird mit mindestens einem vorgegebenen Befehl oder Befehlsmuster verglichen;
c) bei einem Abweichen des Befehls ($B_0$) von dem vorgegebenen Befehlsmuster wird ein transformierter oder korrigierter Befehl ($B_0'$) erzeugt;
d) der transformierte oder korrigierte Befehl ($B_0'$) wird anschließend der Decodiereinrichtung (23) zugeführt.

**11.** Verfahren zur Befehlskorrrektur eines Programmes nach Anspruch 10,
**dadurch gekennzeichnet, daß**
e) die Schritte a) bis d) solange wiederholt werden, bis das vollständige Programm aus dem Programmspeicher (22) geladen wurde und von der Schaltung zur Befehlskorrektur (24) überprüft wurde.

**12.** Verfahren nach einem der Ansprüche 10 oder 11,
**dadurch gekennzeichnet, daß**
der vorgegebene Befehl oder Befehlsmuster über Internet oder einem ähnlichen Datennetzwerk in die Speichereinrichtung (25, 26) oder die Einrichtung zur Befehlskorrektur (24) eingelesen wird.

**13.** Verfahren nach einem der Ansprüche 10 bis 12,
**dadurch gekennzeichnet, daß**
vor dem Vergleich des Befehls mit dem vorgegebenen Befehls oder Befehlsmusters eine Codierabbildung des Befehls ($B_0$) mit einem Codewort ($c_i$) erfolgt.


**Claims**

**1.** Program-controlled unit (2) which is designed to execute a program comprising a multiplicity of instructions ($B_0$),

- having at least one program memory (22), in which the multiplicity of instructions ($B_0$) is stored,
- having at least one decoding device (23), to which individual instructions ($B_0$) can be fed successively from the program memory (2), and
- having at least one execution unit (21), which processes further the decoded instructions ($B_D$) of the decoding device (23),

**characterized in that**
at least one device for instruction correction (24) is provided, which compares an individual instruction ($B_0$) read from the program memory (22) with at least one predetermined instruction or instruction pattern and, in the event of the read-out instruction ($B_0$) deviating from the predetermined instruction or instruction pattern, generates a transformed or corrected instruction ($B_0'$).

**2.** Program-controlled unit according to Claim 1,
**characterized in that**
the device for instruction correction (24) has a memory device (25, 26), in which the predetermined instructions or instruction patterns are stored.

**3.** Program-controlled unit according to Claim 2,
**characterized in that**
the memory device (25, 26) is write-protected.

**4.** Program-controlled unit according to one of the preceding claims,
**characterized in that**
the memory device (25, 26) is a read-only memory.

**5.** Program-controlled unit according to one of the preceding claims,
**characterized in that**
the memory device (25, 26) and/or the circuit for instruction correction (24) can be exchanged.

**6.** Program-controlled unit according to one of the preceding claims,
**characterized in that**
the predetermined instruction or instruction pattern indicates an error in the instruction set of the program memory (22).

**7.** Program-controlled unit according to one of the preceding claims,
**characterized in that**
the predetermined instruction or instruction pattern specifies the data sequence or instructions of at least one known program virus.

**8.** Program-controlled unit according to one of the preceding claims,
**characterized in that**
the program-controlled unit (2) is designed as a microprocessor or as a microcontroller or as a signal processor.

**9.** Program-controlled unit according to one of the preceding claims,
**characterized in that**
the execution unit (21) is the central processing unit.

**10.** Method for instruction correction in a program-controlled unit (2) according to one of the preceding claims, in which the following method steps are executed:

a) an individual instruction ($B_0$) is loaded from the program memory (22) into the circuit for instruction correction (24);
b) the instruction ($B_0$) is compared with at least one predetermined instruction or instruction pattern;
c) in the event of the instruction ($B_0$) deviating from the predetermined instruction pattern, a transformed or corrected instruction ($B_0'$) is generated;
d) the transformed or corrected instruction ($B_0'$) is subsequently fed to the decoding device (23).

**11.** Method for instruction correction of a program according to Claim 10,
**characterized in that**

e) steps a) to d) are repeated until the complete program has been loaded from the program memory (22) and has been checked by the circuit for instruction correction (24).

**12.** Method according to either of Claims 10 and 11,
**characterized in that**
the predetermined instruction or instruction pattern is read into the memory device (25, 26) or the device for instruction correction (24) via the Internet or a similar data network.

**13.** Method according to one of Claims 10 to 12,
**characterized in that**
before the instruction is compared with the predetermined instruction or instruction pattern, coding mapping of the instruction ($B_0$) with a code word ($c_i$) is effected.

**Revendications**

**1.** Unité programmable (2) qui est conçue pour exécuter un programme composé d'une pluralité d'instructions ($B_0$),

- comprenant au moins une mémoire de programme (22) dans laquelle est stockée la pluralité d'instructions ($B_0$),
- comprenant au moins un dispositif de décodage (23) auquel peuvent être acheminées individuellement les instructions ($B_0$) depuis la mémoire de programme (2), et
- comprenant au moins une unité d'exécution (21) qui effectue le traitement postérieur des instructions ($B_0$) décodées par le dispositif de décodage (23),

**caractérisée en ce qu'**il est prévu au moins un dispositif de correction des erreurs (24) qui compare une instruction ($B_0$) individuelle lue dans la mémoire de programme (22) avec au moins une instruction ou un modèle d'instruction prédéfini et qui génère une instruction transformée ou corrigée ($B_0'$) en cas de différence entre l'instruction lue ($B_0$) et l'instruction ou le modèle d'instruction prédéfini.

**2.** Unité programmable selon la revendication 1,
**caractérisée en ce que** le dispositif de correction des erreurs (24) présente un dispositif de mémorisation (25, 26) dans lequel sont stockés les instructions ou modèles d'instruction prédéfinis.

**3.** Unité programmable selon la revendication 2,
**caractérisée en ce que** le dispositif de mémorisation (25, 26) est protégé en écriture.

**4.** Unité programmable selon l'une des revendications précédentes, **caractérisée en ce que** le dispositif de mémorisation (25, 26) est une mémoire morte.

**5.** Unité programmable selon l'une des revendications précédentes, **caractérisée en ce que** le dispositif de mémorisation (25, 26) et/ou le circuit de correction des erreurs (24) peut être remplacé.

**6.** Unité programmable selon l'une des revendications précédentes, **caractérisée en ce que** l'instruction ou le modèle d'instruction prédéfini indique une erreur dans le jeu d'instructions de la mémoire de programme (22).

**7.** Unité programmable selon l'une des revendications précédentes, **caractérisée en ce que** l'instruction ou le modèle d'instruction prédéfini indique la série de données ou les instructions d'au moins un virus informatique connu.

**8.** Unité programmable selon l'une des revendications précédentes, **caractérisée en ce que** l'unité programmable (2) est réalisée sous la forme d'un microprocesseur ou d'un microcontrôleur ou encore d'un processeur de signal.

**9.** Unité programmable selon l'une des revendications précédentes, **caractérisée en ce que** l'unité d'exécution (21) est l'unité de calcul centrale.

**10.** Procédé de correction des erreurs sur une unité programmable (2) selon l'une des revendications précédentes avec lequel sont exécutées les étapes suivantes :

a) Une instruction unique ($B_0$) est chargée de la mémoire de programme (22) dans le circuit de correction des erreurs (24) ;
b) L'instruction ($B_0$) est comparée avec au moins une instruction ou un modèle d'instruction prédéfini ;
c) Une instruction transformée ou corrigée ($B_0'$) est générée en cas de différence entre l'instruction ($B_0$) et le modèle d'instruction prédéfini ;
d) L'instruction transformée ou corrigée ($B_0'$) est ensuite acheminée au dispositif de décodage (23).

**11.** Procédé de correction des erreurs d'un programme selon la revendication 10, **caractérisé en ce que**
e) Les étapes a) à d) sont répétées jusqu'à ce que le programme complet ait été chargé depuis la mémoire de programme (22) et contrôlé par le circuit de correction des erreurs (24).

**12.** Procédé selon l'une des revendications 10 et 11,
**caractérisé en ce que** l'instruction ou le modèle d'instruction prédéfini est chargé dans le dispositif de mémorisation (25, 26) ou dans le dispositif de correction des erreurs (24) par le biais de l'Internet ou d'un réseau de données similaire.

**13.** Procédé selon l'une des revendications 10 à 12,
**caractérisé en ce qu'**une application de code de l'instruction ($B_0$) avec un mot de code ($c_i$) a lieu avant la comparaison de l'instruction avec l'instruction ou le modèle d'instruction prédéfini.

**FIG 1**

**FIG 2**

## FIG 3

24

$B_0$

[A]       Vergleichen

Vergleich mit $i = 1, ...N$
Vergleichsbefehlen $\underline{v}_i$:
$$C_i(B_0) = \underline{v}_i \ ?$$

[B]       Ersetzen

1) $B_0 \neq C_i(\underline{v}_i) \ \forall \ i \ \Rightarrow B_0' = \{B_0\}$
2) $B_0 = C_j(\underline{v}_j) \quad \Rightarrow B_0' = \{e^j_1, ...e^j_{Mj}\}$
3) $B_0 = load \quad \Rightarrow B_0' = \{nop\}$
         Load-Modus

$B_0'$

[C]       Load-Modus

Sequentielle Eingabe von
$k$            = zu überschreibende Zelle
$\underline{v}_k$           = alter Inhalt der Zelle
               (als Password)
$\underline{v}'_k$           = neuer Inhalt der Zelle
$M_k$          = Anzahl Ersatzbefehle
$\underline{e}_1, ..., \underline{e}_{Mk}$ = Ersatzbefehle

Ende, wenn $B_0 = end\text{-}load$ oder falsche
Eingabe erfolgte.